# EUROPÄISCHE PATENTANMELDUNG

(11) **EP 2 305 418 A1**
(43) Veröffentlichungstag der Anmeldung: **06.04.2011**
(21) Anmeldenummer: 09172158.9
(22) Anmeldetag: 03.10.2009
(51) Int. Cl.: B23Q 1/54

(54) **Mehrachsen-Schwenkkopf-Anordnung für eine Bearbeitungsmaschine**

(71) Anmelder: Fischer AG Präzisionsspindeln, 3360 Herzogenbuchsee (CH)
(72) Erfinder: Breuer, Edgar, 9404 Rorschacherberg (CH)
(74) Vertreter: Wilming, Martin

(57) **Zusammenfassung**

Die Erfindung betrifft eine Mehrachsen-Schwenkkopf-Anordnung (1), die eine Verbindungseinrichtung (2) zum Verbinden der Mehrachsen-Schwenkkopf-Anordnung (1) mit einer Bearbeitungsmaschine, eine Halteeinrichtung (3), eine Bearbeitungseinheit (4) und eine drehantreibbare Aufnahme für ein Werkzeug enthält. Die Halteeinrichtung (3) ist relativ zur Verbindungseinrichtung (2) um eine erste Achse (B') schwenkbar gelagert. Die Bearbeitungseinheit (4) ist relativ zur Halteeinrichtung (3) um eine zweite Achse (A) schwenkbar gelagert, welche unter einem Winkel zur ersten Achse (B') verläuft, der mindestens 50°, bevorzugt mindestens 70°, besonders bevorzugt etwa 90° beträgt. Die Aufnahme ist an der der Bearbeitungseinheit (4) angeordnet und um eine dritte Achse (10) drehantreibbar. Die erste Achse (B') ist in einer bestimmungsgemässen Montagelage diagonal zur Z-Achse (Z) des Maschinenkoordinatensystems der Bearbeitungsmaschine. Weiterhin betrifft die Erfindung eine Bearbeitungsmaschine mit mindestens einer Mehrachsen-Schwenkkopf-Anordnung (1), einen Adapter zum Verbinden einer Mehrachsen-Schwenkkopf-Anordnung mit einer Bearbeitungsmaschine, ein Verfahren zum Aufrüsten und/oder Umrüsten einer Bearbeitungsmaschine sowie ein Verfahren zur Bearbeitung eines Werkstücks (50) mit einer Bearbeitungsmaschine.

## Beschreibung

Die vorliegende Erfindung betrifft eine Mehrachsen-Schwenkkopf-Anordnung, eine Bearbeitungsmaschine zur Bearbeitung eines Werkstücks, einen Adapter zum Verbinden einer Mehrachsen-Schwenkkopf-Anordnung mit einer Bearbeitungsmaschine, ein Verfahren zum Aufrüsten und/oder Umrüsten einer Bearbeitungsmaschine sowie ein Verfahren zur Bearbeitung eines Werkstücks gemäss den Oberbegriffen der unabhängigen Patentansprüche.

Eine gattungsgemässe Mehrachsen-Schwenkkopf-Anordnung ist beispielsweise in EP 2 014 409 gezeigt. Diese Mehrachsen-Schwenkkopf-Anordnung enthält eine Verbindungseinrichtung zum Anschliessen an eine Maschine, die um eine erste Achse (B-Achse) drehbar gelagert ist, eine Bearbeitungseinheit, die um eine zweite Achse (A-Achse) drehbar gelagert ist, und eine Spindel, die um eine dritte Achse (C-Achse) drehbar gelagert ist. In der Spindel kann ein Werkzeug aufgenommen werden. Durch Schwenken der Halteeinrichtung um die erste Achse und/oder durch Schwenken der Bearbeitungseinheit um die zweite Achse kann die Richtung der dritten Achse eingestellt werden. Hierdurch können beispielsweise kreisförmige Vertiefungen oder Bohrungen in einem zu bearbeitendem Werkstück erzeugt werden. Dazu wird die dritte Achse entlang einer kegelförmigen Fläche mit einem entsprechend zu wählenden Öffnungswinkel geführt.

Ein weiterer Schwenkkopf ist in EP 1 892 055 gezeigt. Dieser verfügt über einen Träger, einen Schwenkkörper und eine Werkzeugmaschinenspindel. Der Schwenkkörper ist in Bezug auf den Träger um eine horizontal ausgerichtete Schwenkachse B verschwenkbar, und der Schwenkkörper ist in Bezug auf den Schwenkkörper um eine Schwenkachse A verschwenkbar.

Gemäss DIN 66217 wird Bearbeitungsmaschinen ein rechtshändiges, rechtwinkliges Maschinenkoordinatensystem mit den Achsen X, Y und Z zugeordnet. Falls die Arbeitsspindel schwenkbar und nur in einer Schwenkposition parallel zu einer Achse des Maschinenkoordinatensystems ist, so wird gemäss Abschnitt 3.1.3 der Norm diese Achse als Z-Achse festgelegt. Falls hingegen die Arbeitsspindel schwenkbar und in verschiedenen Schwenkpositionen parallel zu verschiedenen Achsen des Maschinenkoordinatensystems ist, so wird gemäss Abschnitt 3.1.4 der Norm als Z-Achse diejenige Koordinatenachse gewählt, die senkrecht zur Werkstückaufspannfläche steht. Bei einer Waagerecht-Konsolfräsmaschine verläuft beispielsweise die Z-Achse in einer horizontalen Richtung, während sie bei einer Senkrecht-Konsolfräsmaschine in der vertikalen Richtung verläuft.

Konventionelle Mehrachsen-Schwenkköpfe wie der in EP 2 014 409 beschriebene sind oder werden derart mit einer Bearbeitungsmaschine, beispielsweise einer Fräsmaschine, verbunden oder verbindbar, dass die erste Achse entweder horizontal oder vertikal ausgerichtet ist. Die erste Achse verläuft also bei dieser konventionellen Ausrichtung parallel zur Z-Achse des Maschinenkoordinatensystems.

Bei dieser konventionellen Anordnung ergeben sich Probleme bei der Bearbeitung entlang einer Bearbeitungsfläche, die senkrecht zur Z-Achse des Maschinenkoordinatensystems verläuft. Beispielsweise ergeben sich bei horizontaler Ausrichtung der ersten Achse Probleme bei der Bearbeitung entlang einer vertikalen Bearbeitungsebene. Unter einer vertikalen Ebene wird hier und im Folgenden stets eine Ebene verstanden, welche senkrecht zu einer horizontalen Richtung verläuft. Ein solches Problem tritt in einer Einstellung auf, in der die Halteeinrichtung derart relativ zur Verbindungseinrichtung angeordnet ist und die Bearbeitungseinheit derart relativ zur Verbindungseinrichtung angeordnet ist, dass die dritte Achse und die erste Achse koaxial verlaufen. Aus dieser Einstellung kann die dritte Achse nur durch Schwenken der Bearbeitungseinheit relativ zur Verbindungseinrichtung um die erste Achse verschwenkt werden. Ein Schwenken um die erste Achse führt in dieser Einstellung hingegen nur zu einem Verdrehen der dritten Achse um sich selbst. Mit anderen Worten ist die dritten Achse aus dieser Einstellung heraus nur entlang eines von eigentlich zwei vorhandenen Freiheitsgraden verschwenkbar. Eine solche Einstellung wird auch als Polstelle der Mehrachsen-Schwenkkopf-Anordnung bezeichnet.

Weitere Schwierigkeiten ergeben sich, wenn das Werkzeug in einer vertikalen Bearbeitungsebene entlang einer geschlossenen Bahn, z. B. entlang einer Kreisbahn geführt werden soll. Ein Problem tritt beispielsweise dann auf, wenn eine vertikale Oberfläche eines Werkstücks entlang einer Bahn bearbeitet werden soll, die die Verlängerung der ersten Achse umschliesst - also etwa, wenn die Bahn kreisförmig ist und die verlängerte erste Achse durch den Mittelpunkt dieses Kreises verläuft. Damit das Werkzeug entlang einer solchen Bahn geführt werden kann, muss die Halteeinrichtung relativ zur Verbindungseinrichtung zwangsläufig um 360° um die erste Achse gedreht werden. Hierdurch entstehen ungewünschte pirouettenartige Bewegungen. Dies macht die Zuführung von Kabeln, Druckleitungen oder Schläuchen zur Spindel äusserst aufwändig. Zwar ist es möglich, die Kabel, Druckleitungen oder Schläuche mittels Kollektoren oder zentraler Drehdurchführungen zur Spindel zu führen; dies erfordert jedoch viel Platz, ist teuer und ausserdem störanfällig.

Ein weiteres Problem bei horizontaler Ausrichtung der ersten Achse ergibt sich, wenn das Werkstück in einer horizontalen Bearbeitungsebene bearbeitet werden soll. In diesem Fall muss nämlich die Bearbeitungseinheit um einen Winkel von 90° oder mehr relativ zur ersten Achse verschwenkt werden. Soll etwa die dritte Achse entlang einer kegelförmigen Fläche mit einem halben Öffnungswinkel von 30° bewegt werden, so muss hierbei die dritte Achse um bis zu 120° gegenüber der ersten Achse verschwenkt werden. Auch dies macht die Zuführung von Kabeln, Druckleitungen oder Schläuchen aufwändig.

Ist andererseits die erste Achse vertikal ausgerichtet, so liegt auch hier bei koaxialer Richtung von dritter Achse und erster Achse eine Einstellung vor, aus der die dritte Achse nur entlang eines einzigen Freiheitsgrades bewegt werden kann. Zudem muss zur Führung des Werkzeuges entlang einer horizontal ausgerichteten, die Verlängerung der ersten Achse umschliessenden Bahn die Halteeinrichtung ebenfalls relativ zur Verbindungseinrichtung zwangsläufig um 360° um die erste Achse gedreht werden. Überdies sind bei dieser Ausrichtung der ersten Achse zur Bearbeitung in einer vertikalen Bearbeitungsebene grosse Schwenkwinkel zwischen der dritten Achse und der ersten Achse nötig.

Durch keine dieser bekannten Anordnungen der ersten Achse ist es also möglich, ein Werkstück sowohl in einer horizontalen als auch in vertikalen Bearbeitungsebene zu bearbeiten, ohne dass hierdurch ein Drehen der Halteeinrichtung relativ zur Verbindungseinrichtung um einen Winkel 360° erforderlich ist oder grosse Schwenkwinkel zwischen dritter Achse und erster Achse auftreten. Folglich entstehen in jedem Fall Schwierigkeiten bei der Zuführung der Kabel, Druckleitungen oder Schläuche.

In sehr vielen Fällen ist das beschriebene Problem nicht einfach dadurch zu lösen, dass das zu bearbeitende Werkstück während der Bearbeitung oder zwischen einzelnen Bearbeitungsschritten gedreht wird. Beispielsweise können die Werkstücke sehr grosse Dimensionen haben, wie dies beispielsweise bei mehrere Meter grossen Strukturteilen im Flugzeugbau der Fall ist. Ein Drehen des Werkstücks ist bei derartigen Dimensionen praktisch unmöglich. In anderen Fällen kann das Werkstück im Wesentlichen quaderförmig ausgebildet sein und beispielsweise auf einem Fliessband an die Bearbeitungsmaschine herangeführt werden. Der obere Trum des Fliessbandes ist dabei in natürlicher Weise in einer horizontalen Ebene ausgerichtet. Da das Werkstück mit einer seiner sechs Seiten auf dieser Ebene liegt, ist auch hierdurch die Ausrichtung des Werkstückes festgelegt.

Es ist daher eine Aufgabe der Erfindung, eine Mehrachsen-Schwenkkopf-Anordnung und eine Bearbeitungsmaschine bereit zu stellen, bei denen diese aus dem Stand der Technik bekannten Nachteile überwunden werden. Insbesondere soll also der Mehrachsen-Schwenkkopf derart mit einer Bearbeitungsmaschine verbunden oder verbindbar sein, dass eine einfachere Bearbeitung eines Werkstücks ermöglicht wird, ohne dass das beschriebene Problem der Polstellen auftritt. Weiterhin sollen grosse Schwenkwinkel der Halteeinrichtung um die erste Achse oder grosse Schwenkwinkel zwischen dritter Achse und erster Achse verhindert werden. Zudem soll insbesondere eine einfache und Platz sparende Zuführung von Kabeln, Druckleitungen oder Schläuchen einfach ermöglicht werden.

Diese Aufgabe wird gemäss einem ersten Aspekt der Erfindung durch eine Mehrachsen-Schwenkkopf-Anordnung gelöst, der eine Verbindungseinrichtung, eine Halteeinrichtung und eine Bearbeitungseinheit enthält. Die Halteeinrichtung und die Bearbeitungseinheit bilden zusammen einen Mehrachsen-Schwenkkopf. Die Verbindungseinrichtung ist zum Verbinden des Mehrachsen-Schwenkkopfs mit einer Bearbeitungsmaschine in mindestens einer bestimmungsgemässen Montagelage ausgebildet. Bei der Bearbeitungsmaschine kann es sich beispielsweise um eine Fräsmaschine oder ein Bohrmaschine handeln. Die Maschine kann beispielsweise auf einem horizontalen oder einem vertikalen Maschinenkonzept basieren.

Die Verbindungseinrichtung der Mehrachsen-Schwenkkopf-Anordnung kann mit einem Maschinenständer der Bearbeitungsmaschine verbunden sein oder verbunden werden. Der Maschinenständer kann seinerseits relativ zu einem Grundrahmen der Bearbeitungsmaschine beweglich angeordnet sein. Auf diese Weise kann die Mehrachsen-Schwenkkopf-Anordnung insgesamt relativ zum Grundrahmen der Bearbeitungsmaschine beweglich sein, insbesondere relativ zu einem Untergrund, auf dem die Bearbeitungsmaschine aufgestellt ist.

Die Halteeinrichtung ist relativ zur Verbindungseinrichtung um eine erste Achse schwenkbar gelagert. Weiterhin ist die Bearbeitungseinheit relativ zur Halteeinrichtung um eine zweite Achse schwenkbar gelagert. Sie verläuft unter einem Winkel zur ersten Achse, der mindestens 50°, bevorzugt mindestens 70°, besonders bevorzugt etwa 90° beträgt. Je grösser der Winkel zwischen der ersten Achse und der zweiten Achse ist, desto grösser ist der Winkelbereich, in den die dritte Achse durch Schwenken um die erste Achse und Schwenken um die zweite Achse gebracht werden kann. Ist etwa der Winkel zwischen der ersten Achse und der zweiten Achse 60° und der Winkel zwischen der zweiten Achse und der dritten Achse 90°, so kann die dritte Achse durch Schwenken um die erste Achse und durch Schwenken um die zweite Achse in Richtungen bewegt werden, die unter einem Winkel von bis zu 60° zu der Ebene geneigt sind, die senkrecht zur ersten Achse verläuft. Eine Ausführung mit einem Winkel von 90° zwischen der ersten Achse und der zweiten Achse ist überdies besonderes bevorzugt, da er baulich und geometrisch besonders einfach ist.

Erfindungsgemäss ist die erste Achse in der bestimmungsgemässen Montagelage diagonal zur Z-Achse des Maschinenkoordinatensystems der Bearbeitungsmaschine ausgerichtet. Das Maschinenkoordinatensystem der Bearbeitungsmaschine ist dabei ein rechtshändiges, rechtwinkliges Koordinatensystem mit den Achsen X, Y und Z, das der Bearbeitungsmaschine gemäss der Norm DIN 66217 zugeordnet wird. Beispielsweise verläuft bei einer Waagerecht-Konsolfräsmaschine die Z-Achse in der Regel in einer horizontalen Richtung, wenn die Bearbeitungsmaschine ordnungsgemäss auf einem horizontalen Untergrund aufgestellt ist. Bei einer Senkrecht-Konsolfräsmaschine verläuft die Z-Achse hingegen in der Regel in der vertikalen Richtung.

Unter diagonaler Ausrichtung zur Z-Achse des Maschinenkoordinatensystems wird hier und im Folgenden eine geneigte Anordnung verstanden, wobei die erste Achse unter einem Winkel relativ zur Z-Achse angeordnet ist, der grösser als 0°, aber kleiner als 90° ist. Diese Neigung kann in jeder Richtung vorliegen. Ist beispielsweise die Z-Achse bei ordnungsgemässer Aufstellung der Bearbeitungsmaschine auf einem horizontalen Untergrund ausgerichtet, so kann die erste Achse um diesen Winkel nach oben oder nach unten geneigt sein.

Aufgrund dieser erfindungsgemässen geneigten Ausrichtung der ersten Achse relativ zur Z-Achse entsteht das oben beschriebene, im Stand der Technik bekannte Problem der Polstellen weder bei paralleler noch bei senkrechter Ausrichtung der dritten Achse zur Z-Achse. Denn weder bei paralleler noch bei senkrechter Ausrichtung der dritten Achse zur Z-Achse ist die dritte Achse parallel zur ersten Achse. Ist etwa die Z-Achse horizontal ausgerichtet und die erste Achse schräg nach unten ausgerichtet, so tritt das Problem der Polstellen weder bei vertikaler noch bei horizontaler Ausrichtung der dritten Achse auf.

Zudem kann das Werkzeug ohne die im Stand der Technik vorliegenden Probleme entlang geschlossener Bahnen geführt werden, und zwar sowohl in Bearbeitungsebenen, die parallel zur Z-Achse ausgerichtet sind, als auch in Bearbeitungsebenen, die senkrecht zur Z-Achse ausgerichtet sind. Ist etwa die Z-Achse horizontal ausgerichtet, so ist eine Führung entlang geschlossener Bahnen sowohl in horizontalen Bearbeitungsebenen als auch in vertikalen Bearbeitungsebenen möglich. Da die erste Achse in diesem Falle unter einem Winkel von mehr als 0° relativ zur horizontalen Richtung ausgerichtet ist, ist die Bearbeitung entlang einer geschlossenen Bahn in einer horizontalen Bearbeitungsebene einfacher. Falls sich beispielsweise die erste Achse, die zweite Achse und die dritte Achse in einem gemeinsamen Schnittpunkt schneiden, so wird die Mehrachsen-Schwenkkopf-Anordnung derart relativ zu der Bearbeitungsebene und der zu erzeugenden Bahn positioniert, dass die senkrechte Projektion dieses Schnittpunktes auf die Bearbeitungsebene in der Nähe der Bahn liegt, insbesondere im Inneren der geschlossenen Bahn. Falls der Winkels hinreichend grösser als 0° ist, so liegt die Verlängerung der B-Achse dann ausserhalb der Bahn. Folglich muss während der Führung des Werkzeugs entlang der Bahn die Halteeinrichtung nicht um 360° um die B-Achse gedreht werden. Da andererseits der Winkel zwischen der ersten Achse und der Z-Achse kleiner ist als 90°, ergeben sich die entsprechenden Vorteile bei der Führung des Werkzeuges entlang eine Bahn in einer horizontalen Bearbeitungsebene.

Ein weiterer Vorteil der erfindungsgemässen Neigung besteht darin, dass bei der Bearbeitung sowohl in einer Bearbeitungsebene, die parallel zur Z-Achse verläuft, als auch in einer Bearbeitungsebene, die senkrecht zur Z-Achse verläuft, geringere Schwenkwinkel zwischen der dritten Achse und der ersten Achse erforderlich sind: Ist wiederum beispielsweise die Z-Achse horizontal ausgerichtet, so sind aufgrund des Winkels von mehr als 0° zwischen der ersten Achse und der Z-Achse bei der Bearbeitung in einer horizontalen Bearbeitungsebene geringere Schwenkwinkel zwischen der dritten Achse und der ersten Achse erforderlich, als dies bei einer konventionellen horizontalen Ausrichtung der ersten Achse der Fall wäre.

Ist beispielsweise die erste Achse um einen Winkel von 30° bezogen auf die Z-Achse nach unten geneigt und ist die dritte Achse zur Bearbeitung in einer horizontalen Bearbeitungsebene vertikal nach unten gerichtet, so wird von der dritten Achse und der ersten Achse ein Winkel von 60° eingeschlossen - im Gegensatz zu einem Winkel von 90°, der bei konventioneller horizontaler Ausrichtung der ersten Achse vorläge. Selbst wenn die dritte Achse entlang einer kegelförmigen Fläche mit einem halben Öffnungswinkel von 30° um eine vertikal nach unten weisende Symmetrieachse herum geführt wird, so wird dabei der Winkel zwischen der dritten Achse und der ersten Achse maximal 90° - im Gegensatz zu einem Winkel von 120°, der bei konventioneller horizontaler Ausrichtung der ersten Achse vorläge.

Da andererseits der Winkel zwischen der ersten Achse und der Z-Achse auch kleiner ist als 90°, sind beispielsweise bei horizontaler Ausrichtung der Z-Achse gegenüber der bekannten vertikalen Ausrichtung der ersten Achse kleinere Winkel zwischen der dritten Achse und der ersten Achse erforderlich, wenn die dritte Achse zur Bearbeitung in einer vertikalen Bearbeitungsebene horizontal ausgerichtet ist.

Insgesamt vereinfachen die durch die erfindungsgemässe Neigung erreichten geringeren Schwenkwinkel der Haltevorrichtung relativ zur Verbindungseinrichtung sowie zwischen der dritten Achse und der ersten Achse die Zuführung von Kabeln, Druckleitungen oder Schläuchen zur Bearbeitungseinheit erheblich. Die mit der Erfindung vorgeschlagene Mehrachsen-Schwenkkopf-Anordnung ist darüber hinaus konstruktiv besonders einfach.

Trotz der konstruktiven Einfachheit erlaubt die Mehrachsen-Schwenkkopf-Anordnung eine 4-Seitenbearbeitung im folgenden Sinne: Ist die erste Achse beispielsweise aus einer horizontal ausgerichteten Z-Achse nach unten geneigt, so kann eine Bearbeitung in einer horizontalen Bearbeitungsebene unterhalb der Mehrachsen-Schwenkkopf-Anordnung und in drei vertikalen Bearbeitungsebenen erfolgen, die seitlich um die Mehrachsen-Schwenkkopf-Anordnung herum angeordnet sind.

Im Rahmen der Erfindung ist es nicht zwingend, dass die erste Achse in jeder bestimmungsgemässen Montagelage relativ zur Z-Achse geneigt ist. In einigen bestimmungsgemässen Montagelagen kann die Mehrachsen-Schwenkkopf-Anordnung auch derart ausgerichtet sein, dass die erste Achse parallel oder senkrecht zur Z-Achse ausgerichtet ist. Erfindungsgemäss ist die erste Achse aber in zumindest einer bestimmungsgemässen Montagelage relativ zur Z-Achse geneigt. Bevorzugt ist die erste Achse aber in jeder bestimmungsgemässen Montagelage der Mehrachsen-Schwenkkopf-Anordnung relativ zur Z-Achse geneigt.

Die Bearbeitungseinheit kann eine Aufnahme für ein Werkzeug aufweisen, die an der Bearbeitungseinheit angeordnet und um eine dritte Achse drehantreibbar ist, beispielsweise mittels eines Motors. Bei der Aufnahme kann es sich etwa um eine an sich bekannte Spindel handeln. In der Aufnahme kann ein Werkzeug aufgenommen sein oder werden, welches insbesondere für eine spanabhebende, spanlose, abtragende, trennende, generative und/oder umformende Bearbeitung ausgelegt sein kann. Das spanabhebende Werkzeug kann dabei einschneidig oder mehrschneidig sein. Das Werkzeug kann beispielsweise ein Bohrer oder ein Fräswerkzeug sein.

Vorteilhafterweise kann die Mehrachsen-Schwenkkopf-Anordnung mittels der Verbindungseinrichtung in mindestens einer ersten Montagelage und in mindestens einer zweiten Montagelage mit der Bearbeitungsmaschine verbindbar sein, wobei der Winkel zwischen der ersten Achse und der Z-Achse in der ersten Montagelage vom Winkel zwischen der ersten Achse und der Z-Achse in der zweiten Montagelage verschieden ist. Hierdurch ist die Mehrachsen-Schwenkkopf-Anordnung variabel mit der Bearbeitungsmaschine verbindbar. Dies erlaubt eine flexible Montage des Mehrachsen-Schwenkkopfes und damit eine grössere Anpassbarkeit an das zu bearbeitende Werkstück und die jeweiligen Anforderungen an dessen Bearbeitung.

Bevorzugt weist die Mehrachsen-Schwenkkopf-Anordnung ausser der ersten Achse und der zweiten Achse keine weitere Schwenkachse auf, mittels deren die Ausrichtung der Bearbeitungseinheit, insbesondere der dritten Achse einstellbar ist. Folglich genügen zwei Schwenkachsen, um die dritte Achse und damit die Drehachse des Werkzeugs einzustellen. Die Mehrachsen-Schwenkkopf-Anordnung ist hierdurch konstruktiv besonders einfach. Darüber hinaus werden nur für zwei Schwenkachsen separate Motoren und Ansteuerungen benötigt.

Bevorzugt ist die erste Achse in der bestimmungsgemässen Montagelage um einen Winkel relativ zur Z-Achse geneigt, der im Bereich von 5° bis 85°, bevorzugt im Bereich von 30° bis 60°, besonders bevorzugt im Bereich von 40° bis 50° liegt. Ganz besonders bevorzugt beträgt der Winkel zwischen der ersten Achse und der Z-Achse in der bestimmungsgemässen Montagelage etwa 45°. Bei einer derartigen Ausrichtung wird ein optimaler Kompromiss zwischen der Bearbeitung in einer zur Z-Achse parallelen und einer zur Z-Achse senkrechten Bearbeitungsebene erreicht, bei beispielsweise horizontaler Ausrichtung der Z-Achse also zwischen einer horizontalen Bearbeitungsebene und einer vertikalen Bearbeitungsebene.

Vorteilhafterweise ist die dritte Achse unter einem Winkel zur zweiten Achse angeordnet, der mindestens 60°, bevorzugt mindestens 80°, besonders bevorzugt etwa 90° beträgt. Je grösser der Winkel zwischen der dritten Achse und der zweiten Achse ist, desto grösser ist der Winkelbereich, in den die dritte Achse durch Schwenken um die erste Achse und Schwenken um die zweite Achse gebracht werden kann. Insbesondere ein Winkel von 90° ist baulich und geometrisch besonders einfach.

In bevorzugten Ausführungsformen sind die Halteeinrichtung und die Bearbeitungseinheit derart ausgebildet, dass die Halteeinrichtung in mindestens einer, bevorzugt in beiden Schwenkrichtungen um die zweite Achse herum um einen Winkel von mindestens 30°, bevorzugt mindestens 60°, besonders bevorzugt mindestens 90° relativ zur ersten Achse verschwenkbar ist. Ist beispielsweise die Z-Achse horizontal ausgerichtet, die erste Achse unter einem Winkel von 45° bezogen auf die Z-Achse nach unten geneigt und ist die Halteeinrichtung in beiden Schwenkrichtungen um die zweite Achse um einen Winkel von 95° verschwenkbar, so kann die dritte Achse sowohl um einen Winkel von 45°+95°=140° aus der horizontalen Ebene nach unten als auch um einen Winkel von 95°-45°=50° aus der horizontalen Ebene nach oben verschwenkt werden.

In vorteilhaften Ausführungsformen schneiden sich die zweite Achse und die erste Achse. Eine solche Ausführungsform ist nicht nur geometrisch einfacher, sie erfordert auch weitaus weniger komplexe Bewegungen der Bearbeitungseinheit und damit der Spindel und des Werkzeuges.

Ebenfalls bevorzugt schneidet die dritte Achse die zweite Achse. Ganz besonders bevorzugt schneiden sich die erste Achse, die zweite Achse und die dritte Achse in einem gemeinsamen Schnittpunkt. Jedes dieser beiden Merkmale für sich ergibt eine geometrisch und baulich einfachere Konstruktion. Darüber hinaus ist die Bearbeitungsmaschine hierdurch einfacher programmierbar. Es ist jedoch im Rahmen der Erfindung selbstverständlich auch möglich, dass die zweite und die dritte Achse mit einem fixen Achsabstand voneinander beabstandet sind.

Die Bearbeitungseinheit kann beispielsweise derart ausgebildet sein, dass sie ein Werkzeug für eine spanabhebende, spanlose, abtragende, trennende, generative und/oder umformende Bearbeitung aufnehmen kann. Das spanabhebende Werkzeug kann dabei einschneidig oder mehrschneidig sein.

In einigen Ausführungsformen umfasst die Bearbeitungseinheit eine Vorrichtung zum Emittieren eines Laserstrahls und/oder einer Vorrichtung zum Emittieren eines Wasserstrahls. Mit einer solchen Mehrachsen-Schwenkkopf-Anordnung ist die Bearbeitung eines Werkstückes nicht nur durch direkten Kontakt mit einem in der Aufnahme aufgenommenen Werkzeug möglich, sondern auch mit Hilfe eines Laserstrahls und/oder eines Wasserstrahls. Die Richtung des Laserstrahls und/der des Wasserstrahls kann dabei die Richtung einer dritten Achse definieren.

Ein weiterer Aspekt der Erfindung betrifft eine Bearbeitungsmaschine zur Bearbeitung eines Werkstücks. Insbesondere kann es sich dabei um eine Fräsmaschine oder um eine Bohrmaschine handeln. Die Bearbeitungsmaschine umfasst mindestens eine Mehrachsen-Schwenkkopf-Anordnung, der insbesondere mindestens eines, mehrere oder alle der oben beschriebenen Merkmale aufweisen kann und folglich die oben beschriebenen Vorteile aufweist. Die in der erfindungsgemässen Bearbeitungsmaschine enthaltene Mehrachsen-Schwenkkopf-Anordnung enthält eine Verbindungseinrichtung, eine Halteeinrichtung und eine Bearbeitungseinheit. Der Mehrachsen-Schwenkkopf ist mittels der Verbindungseinrichtung mit der Bearbeitungsmaschine verbunden oder verbindbar. Die Halteeinrichtung ist relativ zur Verbindungseinrichtung um eine erste Achse schwenkbar gelagert. Die Bearbeitungseinheit ist relativ zur Halteeinrichtung um eine zweite Achse schwenkbar gelagert. Diese zweite Achse verläuft unter einem Winkel zur ersten Achse, der mindestens 50°, bevorzugt mindestens 70°, besonders bevorzugt etwa 90° beträgt. Je grösser der Winkel zwischen der ersten Achse und der zweiten Achse ist, desto grösser ist der Winkelbereich, in den die dritte Achse durch Schwenken um die erste Achse und Schwenken um die zweite Achse gebracht werden kann. Die Bearbeitungsmaschine ist insbesondere als horizontales oder vertikales Maschinenkonzept ausgebildet.

An der Bearbeitungseinheit kann eine drehantreibbare Aufnahme für ein Werkzeug angeordnet sein. Beispielsweise kann es sich bei der Aufnahme um eine Spindel handeln. In der Aufnahme kann ein Werkzeug aufgenommen sein oder werden, welches insbesondere für eine spanabhebende, spanlose, abtragende, trennende, generative und/oder umformende Bearbeitung ausgelegt sein kann. Das spanabhebende Werkzeug kann dabei einschneidig oder mehrschneidig sein. Beispielsweise kann das Werkzeug ein Bohrer oder ein Fräswerkzeug sein. Die Bearbeitungseinheit kann insbesondere derart ausgebildet ist, dass ein Laser-, Wasser- oder Elektronenstrahl emittierbar und auf ein Werkstück richtbar ist.

Erfindungsgemäss ist die erste Achse diagonal zur Z-Achse des Maschinenkoordinatensystems der Bearbeitungsmaschine ausgerichtet. Mit anderen Worten ist also die erste Achse relativ zur Z-Achse geneigt. Das Maschinenkoordinatensystem wird dabei gemäss DIN 66217 festgelegt, wie oben bereits erläutert wurde.

Falls die Z-Achse beispielsweise horizontal ausgerichtet ist, kann die erste Achse nach oben oder nach unten geneigt sein. Aufgrund dieser erfindungsgemässen Ausrichtung der ersten Achse ergeben sich die Vorteile, die bereits oben im Zusammenhang mit der Mehrachsen-Schwenkkopf-Anordnung erläutert wurden.

Bevorzugt ist die erste Achse um einen Winkel relativ zur horizontalen Richtung geneigt, der im Bereich von 5° bis 85°, bevorzugt im Bereich von 30° bis 60°, besonders bevorzugt im Bereich von 40° bis 50° liegt. Ganz besonders bevorzugt beträgt dieser Winkel etwa 45°. Eine derartige Ausrichtung bildet einen optimalen Kompromiss zwischen der Bearbeitung in einer zur Z-Achse parallelen und in einer zur Z-Achse senkrechten Bearbeitungsebene.

Bevorzugt schneiden sich die zweite Achse und die erste Achse, und zwar besonders bevorzugt in einem Maschinennullpunkt der Bearbeitungsmaschine. Hierdurch ergibt sich eine geometrisch und baulich einfachere Konstruktion. Darüber hinaus ist die Bearbeitungsmaschine hierdurch einfacher programmierbar. Der Maschinennullpunkt wird vom Koordinatenursprung des Maschinenkoordinatensystems gebildet.

Die Schwenkbewegungen der Halteeinrichtung relativ zur Verbindungseinrichtung sowie der Bearbeitungseinheit relativ zur Halteeinrichtung können mit an sich bekannten Motoren angetrieben und durch an sich bekannte Ansteuerungen erfolgen. Auch die Drehbewegung der Aufnahme kann mit an sich bekannten Motoren realisiert werden.

Ein weiterer Aspekt der Erfindung betrifft einen Adapter zum Verbinden einer Mehrachsen-Schwenkkopf-Anordnung mit einer Bearbeitungsmaschine. Die Mehrachsen-Schwenkkopf-Anordnung kann eines, mehrere oder alle der oben beschriebenen Merkmale aufweisen. Die Mehrachsen-Schwenkkopf-Anordnung umfasst eine Verbindungseinrichtung, eine Halteeinrichtung und eine Bearbeitungseinheit. Die Halteeinrichtung ist relativ zur Verbindungseinrichtung um eine erste Achse schwenkbar gelagert. Die Bearbeitungseinheit ist relativ zur Halteeinrichtung um eine zweite Achse schwenkbar gelagert ist. Die zweite Achse verläuft unter einem Winkel zur ersten Achse, der mindestens 50°, bevorzugt mindestens 70°, besonders bevorzugt etwa 90° beträgt.

Erfindungsgemäss ist der Adapter derart mit der Verbindungseinrichtung und mit der Bearbeitungsmaschine verbunden oder verbindbar, dass die erste Achse in mindestens einer bestimmungsgemässen Montagelage diagonal zu einer Z-Achse der Bearbeitungsmaschine ausgerichtete ist. Mit anderen Worten ist die erste Achse also zur Z-Achse geneigt. Insbesondere kann die erste Achse bei bestimmungsgemässer Aufstellung der Bearbeitungsmaschine und bei horizontaler Ausrichtung der Z-Achse zu einer horizontalen Ebene geneigt sein.

Ein solcher Adapter ermöglicht es, eine Mehrachsen-Schwenkkopf-Anordnung derart mit einer Bearbeitungsmaschine zu verbinden, dass die erste Achse der Mehrachsen-Schwenkkopf-Anordnung zu einer Z-Achse der Bearbeitungsmaschine geneigt verläuft. Insbesondere kann mit Hilfe dieses Adapters auch eine herkömmliche Mehrachsen-Schwenkkopf-Anordnung derart mit der Bearbeitungsmaschine verbunden werden, dass sich die bereits oben beschriebenen Vorteile ergeben.

Ein weiterer Aspekt der vorliegenden Erfindung betrifft ein Verfahren zum Aufrüsten und/oder Umrüsten einer Bearbeitungsmaschine zur Bearbeitung eines Werkstücks mit mindestens einer Mehrachsen-Schwenkkopf-Anordnung. Bei der Bearbeitungsmaschine kann es sich beispielsweise um eine Fräsmaschine oder eine Bohrmaschine handeln.

Die Mehrachsen-Schwenkkopf-Anordnung enthält eine Verbindungseinrichtung, eine Halteeinrichtung und eine Bearbeitungseinheit. Die Halteeinrichtung ist relativ zur Verbindungseinrichtung um eine erste Achse schwenkbar gelagert. Weiterhin ist die Bearbeitungseinheit relativ zur Halteeinrichtung um eine zweite Achse schwenkbar gelagert. Die zweite Achse verläuft unter einem Winkel zur ersten Achse, der mindestens 50°, bevorzugt mindestens 70°, besonders bevorzugt etwa 90° beträgt. Insbesondere ein Winkel von 90° ist baulich und geometrisch besonders einfach.

Die Mehrachsen-Schwenkkopf-Anordnung kann überdies eine an der Bearbeitungseinheit angeordnete drehantreibbare Aufnahme für ein Werkzeug aufweisen. Die Aufnahme ist an der Bearbeitungseinheit angeordnet und um eine dritte Achse drehantreibbar, beispielsweise mittels eines Motors. Bei der Aufnahme kann es sich etwa um eine an sich bekannte Spindel handeln. Das Werkzeug kann beispielsweise ein Bohrer oder ein Fräswerkzeug sein. Die Mehrachsen-Schwenkkopf-Anordnung kann überdies noch jede beliebige Kombination weiterer der oben beschriebenen Merkmale aufweisen.

Das erfindungsgemässe Verfahren umfasst das Verbinden der Verbindungseinrichtung der mindestens einen Mehrachsen-Schwenkkopf-Anordnung mit der Bearbeitungsmaschine. Dabei wird die Verbindungseinrichtung der Mehrachsen-Schwenkkopf-Anordnung in einer derartigen Montagelage mit der Bearbeitungsmaschine verbunden, dass die erste Achse diagonal zur Z-Achse der Bearbeitungsmaschine, insbesondere zu einer horizontalen Ebene angeordnet ist. Mit anderen Worten ist also die erste Achse relativ zur Z-Achse geneigt.

Eine nach diesem Verfahren aufgerüstete und/oder umgerüstete Bearbeitungsmaschine weist die oben beschriebenen Vorteile auf. Ein solches Verfahren, bei dem lediglich die Mehrachsen-Schwenkkopf-Anordnung eingesetzt oder ausgetauscht wird, ist besonders kostengünstig und wenig aufwendig.

Schliesslich betrifft ein letzter Aspekt der Erfindung ein Verfahren zur Bearbeitung eines Werkstücks mit einer Bearbeitungsmaschine mit einem, mehreren oder allen der oben beschriebenen Merkmale. Das Verfahren umfasst die Bearbeitung des Werkstücks, insbesondere mit einem in der Aufnahme aufgenommenen Werkzeug. Das Werkstück kann beispielsweise durch Plandrehen, Einstichdrehen, Ausdrehen, Gewindestrählen und/oder Schleifen, wie beispielsweise Innenschleifen, bearbeitet werden. Das Verfahren kann beispielsweise mit einem Werkzeug für eine spanabhebende, spanlose, abtragende, trennende, generative und/oder umformende Bearbeitung durchgeführt werden. Insbesondere kann das Werkzeug ein Bohrer oder ein Fräswerkzeug sein.

Aus den oben beschriebenen Gründen ist dieses Verfahren besonders einfach durchzuführen, wenn eine Bearbeitung eines Werkstücks sowohl in einer zur Z-Achse parallelen als auch in einer zur Z-Achse senkrechten Bearbeitungsebene erforderlich ist.

In einer besonderen Ausführungsform des Verfahrens wird die Halteeinrichtung derart relativ zur Verbindungseinrichtung um die erste Achse verschwenkt und/oder die Bearbeitungseinheit derart relativ zur Halteeinrichtung um die zweite Achse verschwenkt, dass das Werkzeug in einer zur Z-Achse parallelen oder zur Z-Achse senkrechten Bearbeitungsebene geführt wird, insbesondere in einer horizontalen oder vertikalen Bearbeitungsebene, insbesondere entlang einer geschlossenen Bahn, bevorzugt entlang einer Kreisbahn. Zur Führung entlang einer Kreisbahn kann die dritte Achse entlang einer kegelförmigen Fläche geführt werden. Die Führung der dritten Achse entlang einer kegelförmigen Fläche wird durch den halben Öffnungswinkel des Kegels charakterisiert. Insbesondere dann, wenn die erste Achse um einen Winkel von etwa 45° relativ zur Z-Achse geneigt ist, können sowohl in einer zur Z-Achse parallelen als auch ein einer zur Z-Achse senkrechten Bearbeitungsebene Bewegungen mit einem möglichst grossen halben Öffnungswinkel durchgeführt werden, ohne dass unvorteilhaft grosse Schwenkwinkel zwischen der dritten Achse und der ersten Achse auftreten.

Bevorzugt wird das Werkzeug synchron zu der Führung entlang der kegelförmigen Fläche um die dritte Achse und mit der gleichen Umlaufwinkelgeschwindigkeit gedreht. Somit kann als Werkzeug auch ein an sich bekanntes Schneidwerkzeug eingesetzt werden, welches nur eine Schneidekante aufweist.

Weiterhin betrifft die Erfindung ein Verfahren zur Bearbeitung eines Werkstücks durch Plandrehen entlang einer Bearbeitungsebene. Insbesondere kann das Verfahren eines oder mehrere der bereits oben beschriebenen Merkmale und/oder Verfahrensschritte umfassen. So kann etwa das Verfahren mit einer Bearbeitungsmaschine mit einem oder mehreren der oben beschriebenen Merkmale ausgeführt werden.

Das Werkzeug ist mit seiner Längsrichtung entlang einer dritten Achse ausgerichtet. Das Werkzeug kann beispielsweise von einer Aufnahme einer Bearbeitungseinheit einer erfindungsgemässen Bearbeitungsmaschine aufgenommen sein. Die Ausrichtung der dritten Achse ist dann durch die Ausrichtung der Bearbeitungseinheit festgelegt.

Die dritte Achse wird in mindestens einem ersten Schritt im Wesentlichen entlang einer ersten kegelförmigen Fläche mit einem ersten halben Öffnungswinkel und mit einem ersten Abstand zwischen der Kegelspitze der ersten kegelförmigen Fläche und der Bearbeitungsebene geführt. In mindestens einem zweiten Schritt wird die dritte Achse im Wesentlichen entlang einer zweiten kegelförmigen Fläche mit einem zweiten halben Öffnungswinkel und mit einem zweiten Abstand zwischen der Kegelspitze der zweiten kegelförmigen Fläche und der Bearbeitungsebene geführt.

Erfindungsgemäss ist der zweite halbe Öffnungswinkel vom ersten halben Öffnungswinkel verschieden ist und/oder der zweite Abstand vom ersten Abstand verschieden.

Der erste Schritt und der zweite Schritt müssen dabei nicht zeitlich strikt voneinander getrennt sein; sie können auch kontinuierlich ineinander übergehen. Weiterhin kann auch einer der halben Öffnungswinkel 0° sein; dies bedeutet, dass sich die dritte Achse nicht im Raum bewegt.

Im Gegensatz zu bekannten Verfahren zum Plandrehen muss beim erfindungsgemässen Verfahren das Werkstück nicht gedreht werden; die erforderliche Relativbewegung zwischen Werkzeug und Werkstück kann allein durch die Bewegung des Werkzeuges erfolgen. Dies ist vor allem dann ein immenser Vorteil, wenn das Werkstück grosse Dimensionen hat, wie es beispielsweise bei mehrere Meter grossen Strukturteilen im Flugzeugbau der Fall ist.

Bevorzugt wird das Werkzeug synchron zu der Führung entlang der kegelförmigen Flächen um die dritte Achse und mit der gleichen Umlaufwinkelgeschwindigkeit gedreht. Somit kann als Werkzeug auch ein an sich bekanntes Schneidwerkzeug eingesetzt werden, welches nur eine Schneidekante aufweist.

Bevorzugt wird der Abstand der Kegelspitze zur Bearbeitungsebene zu jedem Zeitpunkt auf den aktuellen halben Öffnungswinkel abgestimmt. Durch eine solche Abstimmung ist es etwa möglich, auch ebene Flächen innerhalb oder parallel zur Bearbeitungsebene zu bearbeiten.

Die Erfindung wird nachfolgend anhand eines Ausführungsbeispiels und Zeichnungen genauer erläutert. Darin zeigen
- Figur 1:: eine perspektivische Ansicht einer erfindungsge- mässen Mehrachsen-Schwenkkopf-Anordnung in einer ersten Einstellung;
- Figur 2:: eine perspektivische Ansicht der Mehrachsen- Schwenkkopf-Anordnung gemäss Figur 1 in einer zweiten Einstellung und ein mit der Mehrachsen- Schwenkkopf-Anordnung bearbeitetes Werkstück;
- Figur 3:: eine erste Seitenansicht der Mehrachsen- Schwenkkopf-Anordnung gemäss Figuren 1 und 2;
- Figur 4:: eine zweite Seitenansicht der Mehrachsen- Schwenkkopf-Anordnung gemäss Figuren 1 bis 3;
- Figur 5:: eine Draufsicht der Mehrachsen-Schwenkkopf- Anordnung gemäss Figuren 1 bis 4;
- Figuren 6a/b:: eine Darstellung zum erfindungsgemässen Verfah- ren.

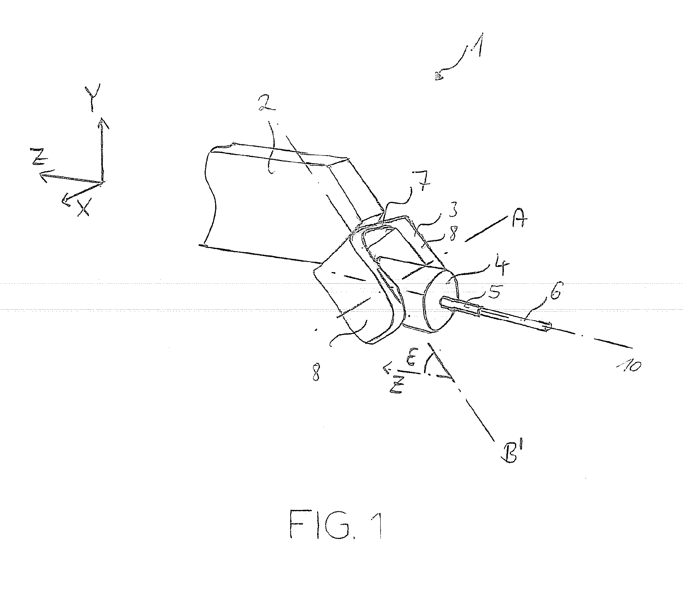

In Figur 1 ist eine erfindungsgemässe Mehrachsen-Schwenkkopf-Anordnung 1 in einer ersten Einstellung gezeigt. Die Mehrachsen-Schwenkkopf-Anordnung 1 enthält eine Verbindungseinrichtung 2, eine Halteeinrichtung 3, eine Bearbeitungseinheit 4 sowie eine Spindel 5 zur Aufnahme eines Werkzeuges, welches als Fräswerkzeug 6 ausgebildet ist.

Mittels der Verbindungseinrichtung 2 kann die Mehrachsen-Schwenkkopf-Anordnung 1 in mindestens einer in Figur 1 gezeigten bestimmungsgemässen Montagelage einer hier nicht dargstellten Bearbeitungsmaschine verbunden werden. Bei der Bearbeitungsmaschine kann es sich beispielsweise um eine Fräsmaschine handeln.

Die nicht dargestellte Bearbeitungsmaschine weist eine durch zwei zueinander senkrechte Achsen X und Z festgelegte Grundebene auf, welche bei ordnungsgemässer Aufstellung der Bearbeitungsmaschine horizontal ausgerichtet ist. Diese Achsen sind gemäss der Norm DIN 66217 festgelegt. Die Grundebene kann beispielsweise durch eine ebene Grundplatte an der Unterseite der Bearbeitungsmaschine festgelegt sein, welche bei ordnungsgemässer Aufstellung der Bearbeitungsmaschine auf einem horizontalen Untergrund steht. Bei dieser ordnungsgemässen Aufstellung der Bearbeitungsmaschine ist also die Grundebene eine horizontale Ebene. Senkrecht zu beiden Achsen X und Z verläuft eine Achse Y, so dass die Achsen X, Y, Z ein rechtshändiges, rechtwinkliges Maschinenkoordinatensystem aufspannen. Alternativ hierzu sind selbstverständlich auch Ausführungsformen denkbar und liegen im Rahmen der Erfindung, bei denen die Z-Achse bei ordnungsgemässer Aufstellung der Bearbeitungsmaschine vertikal oder auch zu einer horizontalen Ebene geneigt verläuft.

Die Halteeinrichtung 3 ist als Gabel ausgebildet, welche eine Grundplatte 7 aufweist, an der zwei Gabelarme 8 ausgebildet sind. Die Gabel ist mittels der Grundplatte 7 um eine erste Achse B' relativ zur Verbindungseinrichtung 2 schwenkbar gelagert. Die Gabelarme 8 erstrecken sich in Richtung der ersten Achse B'. Die erste Achse B' ist in der in Figur 1 dargestellten bestimmungsgemässen Montagelage unter einem Winkel von ε = 45° relativ zur Z-Achse geneigt. Zur Verdeutlichung des Unterschiedes gegenüber herkömmlichen vertikalen Anordnung der ersten Achse, die im Allgemeinen mit B bezeichnet wird, wird für die hier vorhandene geneigte erste Achse die Bezeichnung B' verwendet.

Die Bearbeitungseinheit 4 ist relativ zur Halteeinrichtung 3 um eine zweite Achse A schwenkbar gelagert und wird zwischen den beiden Gabelarmen 8 gehalten. Die zweite Achse A verläuft senkrecht zur ersten Achse B' und schneidet diese im Maschinennullpunkt M. Die Spindel 5 ist an der Bearbeitungseinheit 4 angeordnet und um eine dritte Achse 10 drehantreibbar, welche senkrecht zur zweiten Achse A verläuft. Auch die dritte Achse 10 verläuft durch den Maschinennullpunkt, so dass sich alle drei Achsen A, B' und 10 im Maschinennullpunkt scheiden.

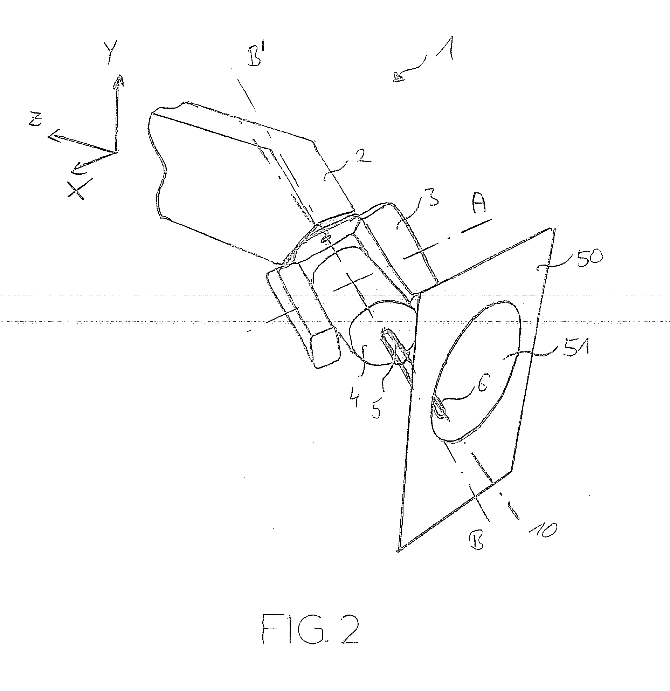

In Figur 2 ist eine perspektivische Ansicht der Mehrachsen-Schwenkkopf-Anordnung 1 gemäss Figur 1 in einer zweiten Einstellung dargestellt. Gegenüber der in Figur 1 dargestellten ersten Einstellung wurde die Halteeinrichtung 3 um die erste Achse B' relativ zur Verbindungseinrichtung 2 verschwenkt, und die Bearbeitungseinheit 4 wurde um die zweite Achse A relativ zur Halteeinrichtung 3 verschwenkt. Aufgrund dieser Schwenkbewegungen ist die dritte Achse 10 in Figur 2 in eine andere Richtung gerichtet als in Figur 1.

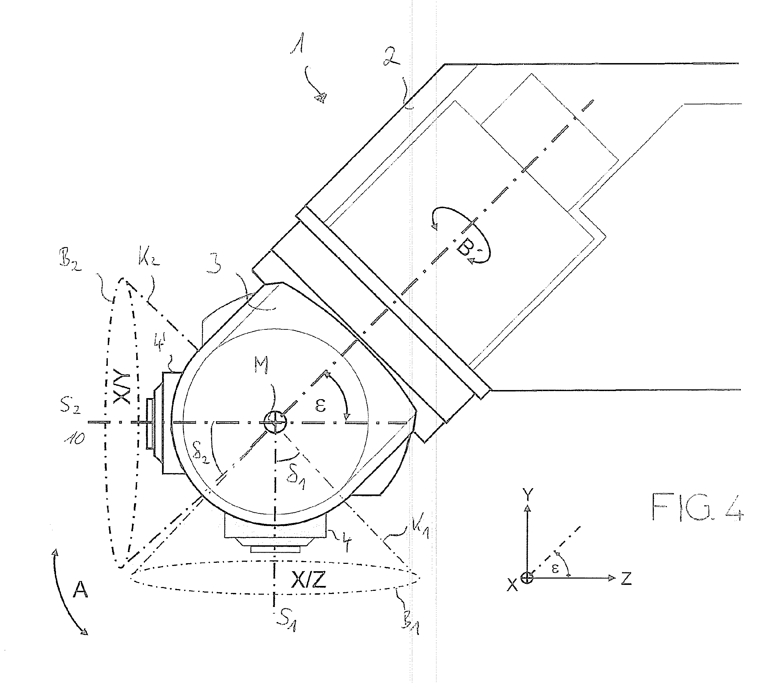

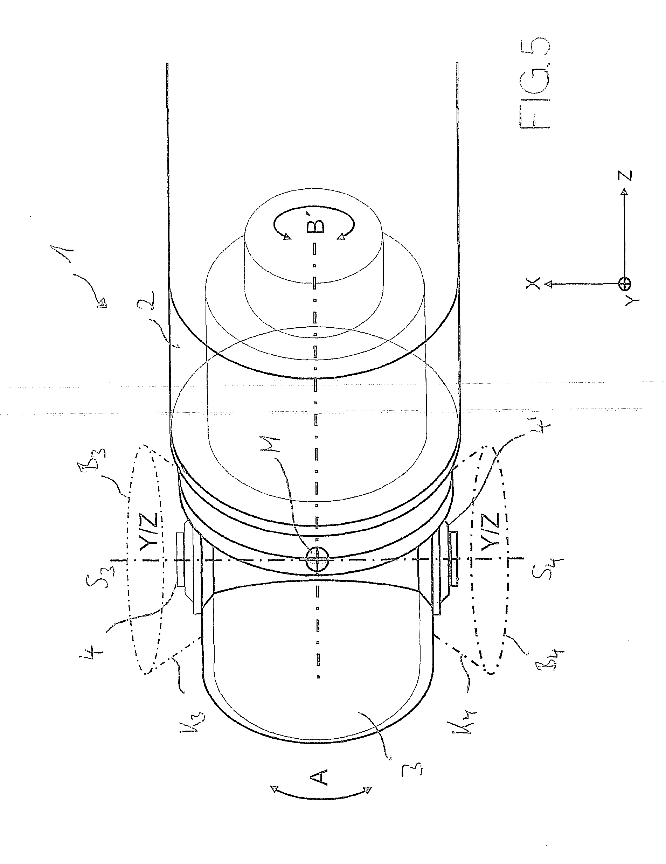

Figur 2 zeigt ebenfalls ein Werkstück 50, welches in einer vertikalen Ebene X/Y angeordnet ist. Durch kontinuierliches Verschwenken der Halteeinrichtung 3 relativ zur Verbindungseinrichtung 2 um die erste Achse B' und durch kontinuierliches Verschwenken der Bearbeitungseinheit 4 relativ zur Halteeinrichtung 3 um die zweite Achse A wird die dritte Achse 10 im Wesentlichen entlang einer kegelförmigen Fläche geführt (vgl. Figuren 4 und 5 unten). Auf diese Weise wird in dem Werkstück 50 eine kreisförmige Öffnung 51 erzeugt.

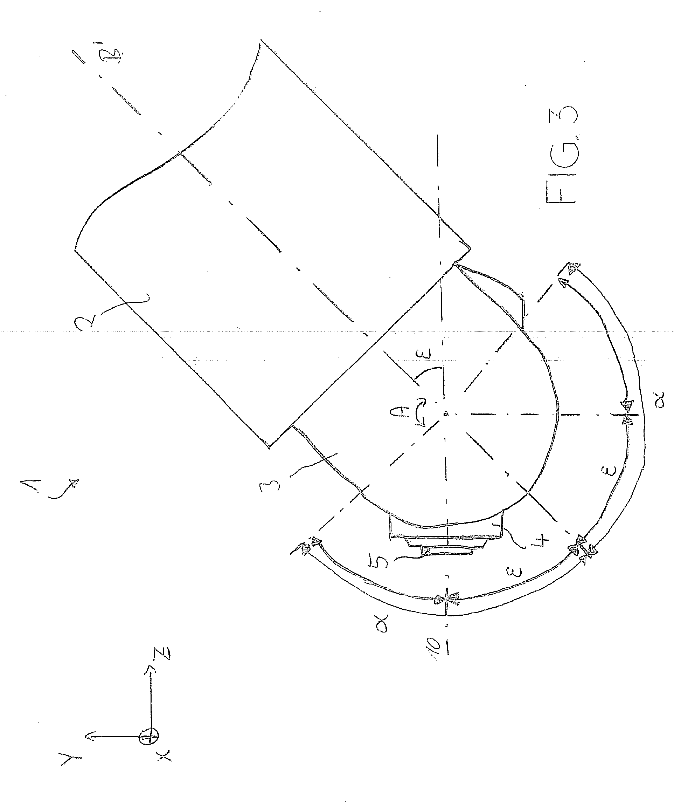

Die Figur 3 zeigt die Mehrachsen-Schwenkkopf-Anordnung 1 gemäss den Figuren 1 und 2 in einer Seitenansicht. Wie hier gut zu erkennen ist, ist die erste Achse B' um einen Winkel von ε = 45° zur Z-Achse geneigt und verläuft in der vertikalen Ebene Y/Z nach schräg unten. In der dargestellten Position ist die Bearbeitungseinheit 4 derart ausgerichtet, dass die dritte Achse 10 in Richtung der negativen Z-Achse und damit horizontal verläuft. Die Halteeinrichtung 3 und die Bearbeitungseinheit 4 sind derart ausgebildet, dass die Halteeinrichtung 3 in beiden Schwenkrichtungen um die zweite Achse A herum um einen Winkel α von 95° relativ zur ersten Achse B' verschwenkbar ist. Hierdurch kann die dritte Achse 10 einerseits um einen Winkel von ε + α = 45° + 95° = 140° aus der horizontalen Ebene X/Z und innerhalb der Ebene Y/Z nach unten verschwenkt werden. Andererseits kann die dritte Achse 10 bis zu einem Winkel von α - ε = 95° - 45° = 50° aus der horizontalen Ebene X/Z innerhalb der Ebene Y/Z nach oben verschwenkt werden. Ein derartiger Schwenkbereich von -140° bis +50° kann nur aufgrund der Neigung der ersten Achse B' relativ zur horizontalen Ebene X/Z erreicht werden; wäre die erste Achse B' beispielsweise vertikal nach unten ausgerichtet, so wäre aufgrund eines vorherigen Anstossens der Bearbeitungseinheit 4 an der Halteeinrichtung 3 eine Winkeleinstellung von +50° nicht möglich.

Die Figur 4 zeigt eine weitere Seitenansicht der Mehrachsen-Schwenkkopf-Anordnung 1. In dieser Darstellung sind schematisch zwei kegelförmige Flächen K₁ und K₂ gezeigt, entlang denen die dritte Achse 10 geführt werden kann.

Die erste Symmetrieachse S₁ der ersten kegelförmigen Fläche K₁ erstreckt sich horizontal nach unten in Richtung der negativen Y-Achse, schneidet also die horizontale Ebene X/Z. In Figur 4 ist mit 4 die Bearbeitungseinheit in einer ersten Position bezeichnet, in welcher die dritte Achse 10 in Richtung der ersten Symmetrieachse S₁ gerichtet ist. Gemäss den obigen Ausführungen kann durch Verschwenken der Halteeinrichtung 3 relativ zur Verbindungseinrichtung 2 um die erste Achse B' und durch gleichzeitiges Verschwenken der Bearbeitungseinheit 4 relativ zur Halteeinrichtung 3 um die zweite Achse A die dritte Achse 10 entlang der ersten kegelförmigen Fläche K₁ geführt werden. Aufgrund der Neigung der ersten Achse B' relativ zur horizontalen Ebene X/Z muss die Halteeinrichtung 3 relativ zur Verbindungseinrichtung nicht um 360° um die erste Achse gedreht werden, was die Zuführung von Kabeln, Druckleitungen oder Schläuchen vereinfacht. Durch die Bewegung der dritten Achse 10 kann eine kreisförmige Bahn B₁ in eine Oberfläche eines hier nicht dargestellten Werkstückes erzeugt werden, die in der horizontalen Ebene X/Z verläuft. Der halbe Öffnungswinkel δ₁ der ersten kegelförmigen Fläche K₁ beträgt etwa 43°. Bei der Bewegung der dritten Achse 10 entlang der kegelförmigen Fläche K₁ wird der Winkel zwischen der dritten Achse 10 und der ersten Achse B' niemals grösser als 90°. Auch dies vereinfacht die Zuführung von Kabeln, Druckleitungen oder Schläuchen zur Spindel 5.

Die zweite Symmetrieachse S₂ der zweiten kegelförmigen Fläche K₂ erstreckt sich in Richtung der negativen Z-Achse. In Figur 4 ist mit 4' die Bearbeitungseinheit in einer zweiten Position bezeichnet, in welcher die dritte Achse 10 in Richtung dieser zweiten Symmetrieachse S₂ gerichtet ist. Entsprechend kann eine kreisförmige Bahn B₂ in eine Oberfläche eines hier nicht dargestellten Werkstückes erzeugt werden, die in der vertikalen Ebene X/Y verläuft. Der Öffnungswinkel δ₂ der zweiten kegelförmigen Fläche K₂ beträgt ebenfalls etwa 43°. Aufgrund der Neigung der ersten Achse B' relativ zur horizontalen Ebene X/Z muss auch bei der Führung der dritten Achse 10 entlang der zweiten kegelförmigen Fläche K₂ die Halteeinrichtung 3 relativ zur Verbindungseinrichtung nicht um 360° um die erste Achse gedreht werden. Überdies wird bei dieser Bewegung der Winkel zwischen der dritten Achse 10 und der ersten Achse B' niemals grösser als 90°.

Weder in der mit 4 noch in der mit 4' bezeichneten Position der Bearbeitungseinheit tritt das oben beschrieben, im Stand der Technik bekannte Problem der Polstelle auf. Falls die Bearbeitungseinheit in einer der Positionen 4, 4' ausgerichtet ist, so ist mittels Verschwenkens um die erste Achse B' und/oder Verschwenkens um die zweite Achse A stets ein Verschwenken der dritten Achse 10 um beide zur dritten Achse 10 senkrecht verlaufende Rotationsfreiheitsgrade möglich.

In der Figur 5 ist eine Draufsicht auf die erfindungsgemässe Mehrachsen-Schwenkkopf-Anordnung 1 gezeigt. Durch Verschwenken der Halteeinrichtung 3 relativ zur Verbindungseinrichtung 2 um die erste Achse B' und durch Verschwenken der Bearbeitungseinheit 4 relativ zur Halteeinrichtung 3 um die zweite Achse A kann die dritte Achse 10 auch entlang einer dritten kegelförmigen Fläche K₃ oder entlang einer vierten kegelförmigen Fläche K₄ geführt werden, deren halbe Öffnungswinkel δ₃ bzw. δ₄ beide etwa 34° betragen. Die Symmetrieachse S₃ der dritten kegelförmigen Fläche K₃ erstreckt sich dabei in Richtung der negativen X-Achse, während sich die Symmetrieachse S₄ der vierten kegelförmigen Fläche K₄ in Richtung der positiven X-Achse erstreckt. Mit 4 ist die Position der Bearbeitungseinheit in Richtung der dritten Symmetrieachse S₃ dargestellt, während 4' die Position der Bearbeitungseinheit in Richtung der vierten Symmetrieachse S₄ zeigt. Somit können auch kreisförmige Bahnen B₃ bzw. B₄ in Oberflächen eines hier nicht dargestellten Werkstücks erzeugt werden, die in vertikalen Ebenen Y/Z und seitlich der Mehrachsen-Schwenkkopf-Anordnung 1 verlaufen. Insgesamt wird somit eine 4-Seitenbearbeitung ermöglicht.

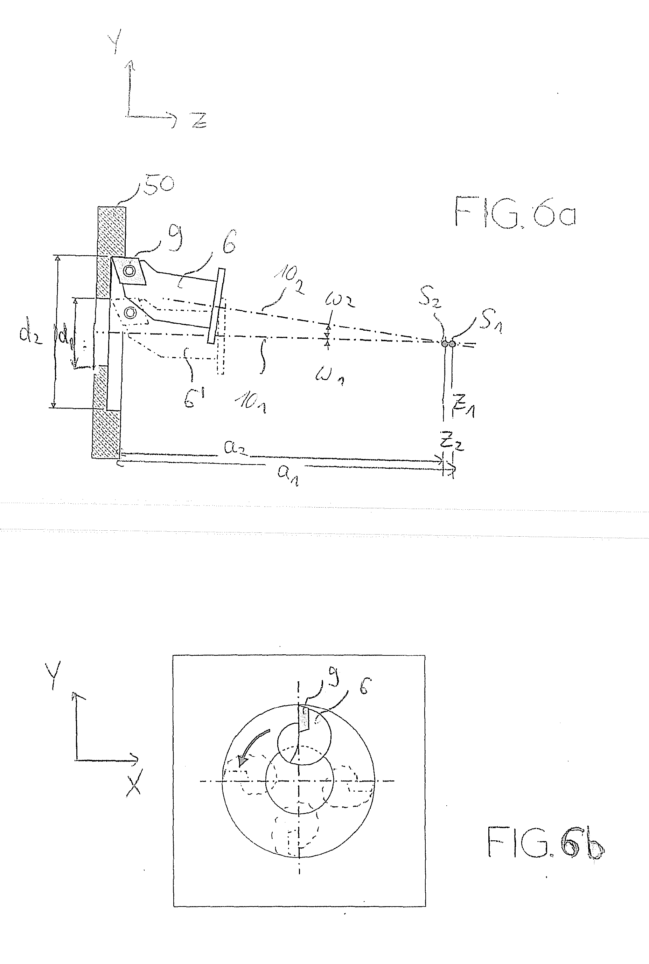

In den Figuren 6a und 6b ist ein erfindungsgemässes Verfahren dargstellt. Die Figur 6a zeigt eine Seitenansicht. Ein in einer horizontalen Ebene X/Y angeordnetes Werkstück 50 wird mit einem Werkzeug bearbeitet, das als Schneidewerkzeug mit einer Schneidekante 9 ausgebildet ist. Das Schneidewerkzeug ist in einer ersten Position 6 während eines ersten Verfahrensschrittes (gestrichelte Linien) und in einer zweiten Position 6' während eines zweiten Verfahrensschrittes (durchgezogene Linien) dargestellt. Das Schneidewerkzeug 6 wird von einer hier nicht dargestellten Bearbeitungseinheit gehalten. Die Bearbeitungseinheit kann beispielsweise Teil einer Bearbeitungsmaschine gemäss den Figuren 1 bis 5 sein.

In einem ersten Schritt wird das Schneidewerkzeug 6 lediglich um seine dritte Achse 10₁ herum gedreht. Die dritte Achse 10 bewegt sich dabei nicht im Raum; sie bewegt sich also entlang einer ersten kegelförmigen Fläche mit erstem halben Öffnungswinkel ω₁=0°. Der Abstand a₁ zwischen der ersten Kegelspitze S₁ der ersten kegelförmigen Fläche und der Bearbeitungsebene X/Y wird dabei durch die Z-Koordinate Z₁ der ersten Kegelspitze S₁ festgelegt. Bei Drehung des Schneidewerkzeugs 6 um die dritte Achse 10 wird im Werkstück 50 entlang eines Kreises mit dem Durchmesser d₁ geschnitten.

In einem zweiten Schritt wird das Schneidewerkzeug 6' nicht nur um seine dritte Achse 10₂ herum gedreht, sondern zusätzlich entlang einer zweiten kegelförmigen Fläche mit halbem Öffnungswinkel ω₂ geführt, der grösser als 0° und damit von ω₁ verschieden ist. Der Abstand a₂ zwischen der Kegelspitze S₂ der zweiten kegelförmigen Fläche und der Bearbeitungsebene X/Y wird dabei durch die Z-Koordinate Z₂ der zweiten Kegelspitze S₂ festgelegt. Bei dieser Bewegung des Schneidewerkzeugs 6' wird im Werkstück 50 entlang eines Kreises mit dem Durchmesser d₂ geschnitten.

Die Schnittbewegung kann somit über die Interpolation einer Spirale mittels zweier Schwenkachsen erfolgen. Dem Fachmann ist mit diesem erfindungsgemässen Verfahren leicht ermöglicht, auch komplexe Plandrehaufgaben zu lösen.

Figur 6b zeigt eine schematische Schnittansicht in der Bearbeitungsebene X/Y. Die durchgezogenen Linien zeigen eine Schnittansicht durch das Schneidewerkzeug 6 mit Schneidekante 9 in einer ersten Position, während die gestrichelten Linien das Schneidewerkzeug in weiteren Position zeigen. Das Schneidewerkzeug wird synchron zu der Führung entlang der kegelförmigen Fläche um die zur Zeichenebene senkrechte dritte Achse und mit der gleichen Umlaufwinkelgeschwindigkeit gedreht. Hierdurch wird gewährleistet, dass die Schneidekante 9 stets senkrecht zu ihrer Bewegungsrichtung ausgerichtet ist.

## Patentansprüche

1. Mehrachsen-Schwenkkopf-Anordnung (1), umfassend
- eine Verbindungseinrichtung (2) zum Verbinden eines Mehrachsen-Schwenkkopfs mit einer Bearbeitungsmaschine, insbesondere einer Fräsmaschine oder einer Bohrmaschine, in mindestens einer bestimmungsgemässen Montagelage;
- eine Halteeinrichtung (3), die relativ zur Verbindungseinrichtung (2) um eine erste Achse (B') schwenkbar gelagert ist;
- eine Bearbeitungseinheit (4), die relativ zur Halteeinrichtung (3) um eine zweite Achse (A) schwenkbar gelagert ist, welche unter einem Winkel zur ersten Achse (B') verläuft, der mindestens 50°, bevorzugt mindestens 70°, besonders bevorzugt etwa 90° beträgt;
**dadurch gekennzeichnet, dass** die erste Achse (B') in der bestimmungsgemässen Montagelage diagonal zur Z-Achse (Z) des Maschinenkoordinatensystems der Bearbeitungsmaschine ausgerichtet ist.

2. Mehrachsen-Schwenkkopf-Anordnung (1) gemäss Anspruch 1, **dadurch gekennzeichnet, dass** sie eine an der Bearbeitungseinheit (4) angeordnete und insbesondere um eine dritte Achse (10) drehantreibbare Aufnahme, insbesondere eine Spindel (5), für ein Werkzeug aufweist, insbesondere für einen Bohrer oder ein Fräswerkzeug (6).

3. Mehrachsen-Schwenkkopf-Anordnung (1) gemäss einem der vorhergehenden Ansprüche, **dadurch gekennzeichnet, dass** sie ausser der ersten Achse (B') und der zweiten Achse (A) keine weitere Schwenkachse aufweist, mittels welcher die Ausrichtung der Bearbeitungseinheit (4), insbesondere der dritten Achse (10) einstellbar ist.

4. Mehrachsen-Schwenkkopf-Anordnung (1) gemäss einem der vorhergehenden Ansprüche, **dadurch gekennzeichnet, dass** die erste Achse (B') in der bestimmungsgemässen Montagelage um einen Winkel (ε) relativ zur Z-Achse (Z) des Maschinenkoordinatensystems der Bearbeitungsmaschine geneigt ist, der im Bereich von 5° bis 85°, bevorzugt im Bereich von 30° bis 60°, besonders bevorzugt im Bereich von 40° bis 50° liegt, ganz besonders bevorzugt etwa 45° beträgt.

5. Mehrachsen-Schwenkkopf-Anordnung (1) gemäss einem der vorhergehenden Ansprüche, **dadurch gekennzeichnet, dass** die Halteeinrichtung (3) und die Bearbeitungseinheit (4) derart ausgebildet sind, dass die Halteeinrichtung (3) in mindestens einer, bevorzugt in beiden Schwenkrichtungen um die zweite Achse (A) herum um einen Winkel (α) von mindestens 30°, bevorzugt mindestens 60°, besonders bevorzugt mindestens 90° relativ zur ersten Achse (B') verschwenkbar ist.

6. Mehrachsen-Schwenkkopf-Anordnung (1) gemäss einem der vorhergehenden Ansprüche, **dadurch gekennzeichnet, dass** sie mittels der Verbindungseinrichtung (2) in mindestens einer ersten Montagelage und in mindestens einer zweiten Montagelage mit der Bearbeitungsmaschine verbindbar ist, wobei der Winkel (ε) in der ersten Montagelage vom Winkel (ε) in der zweiten Montagelage verschieden ist.

7. Mehrachsen-Schwenkkopf-Anordnung (1) gemäss einem der vorhergehenden Ansprüche, **dadurch gekennzeichnet, dass** sich die zweite Achse (A) und die erste Achse (B') schneiden oder mit einem fixen Achsabstand voneinander beabstandet sind.

8. Mehrachsen-Schwenkkopf-Anordnung (1) gemäss einem der Ansprüche 2 bis 7, **dadurch gekennzeichnet, dass** sich die dritte Achse (C) und die zweite Achse (A) schneiden, insbesondere in einem Schnittpunkt der zweiten Achse (A) und der ersten Achse (B').

9. Bearbeitungsmaschine zur Bearbeitung eines Werkstücks (50), insbesondere Fräsmaschine oder Bohrmaschine, umfassend mindestens eine Mehrachsen-Schwenkkopf-Anordnung (1), insbesondere gemäss einem der Ansprüche 1 bis 8, wobei die Mehrachsen-Schwenkkopf-Anordnung (1) enthält:
- eine Verbindungseinrichtung (2), mittels dessen ein Mehrachsen-Schwenkkopf mit der Bearbeitungsmaschine verbunden oder verbindbar ist;
- eine Halteeinrichtung (3), die relativ zur Verbindungseinrichtung (2) um eine erste Achse (B') schwenkbar gelagert ist;
- eine Bearbeitungseinheit (4), die relativ zur Halteeinrichtung (3) um eine zweite Achse (A) schwenkbar gelagert ist, welche unter einem Winkel zur ersten Achse (B') verläuft, der mindestens 50°, bevorzugt mindestens 70°, besonders bevorzugt etwa 90° beträgt;
**dadurch gekennzeichnet, dass** die erste Achse (B') diagonal zur Z-Achse (Z) des Maschinenkoordinatensystems der Bearbeitungsmaschine ausgerichtet ist, wobei die Bearbeitungsmaschine insbesondere als horizontales oder vertikales Maschinenkonzept ausgebildet ist.

10. Bearbeitungsmaschine gemäss Anspruch 9, **dadurch gekennzeichnet, dass** die erste Achse (B') um einen Winkel (ε) relativ zur Z-Achse (Z) des Maschinenkoordinatensystems der Bearbeitungsmaschine geneigt ist, der im Bereich von 5° bis 85°, bevorzugt im Bereich von 30° bis 60°, besonders bevorzugt im Bereich von 40° bis 50° liegt, ganz besonders bevorzugt etwa 45° beträgt.

11. Bearbeitungsmaschine gemäss einem der Ansprüche 9 oder 10, **dadurch gekennzeichnet, dass** sich die zweite Achse (A) und die erste Achse (B') schneiden, insbesondere in einem Maschinennullpunkt (M) der Bearbeitungsmaschine.

12. Bearbeitungsmaschine gemäss einem der Ansprüche 9 bis 11, **dadurch gekennzeichnet, dass** die Bearbeitungseinheit (4) für eine Bearbeitungsart eines Werkstücks ausgebildet ist, die ausgewählt ist aus der Gruppe bestehend aus spanabhebenden, spanlosen, abtragenden, trennenden, generativen und umformenden Bearbeitungsarten; wobei die Bearbeitungseinheit (4) insbesondere derart ausgebildet ist, dass ein Laser-, Wasser- oder Elektronenstrahl emittierbar und auf ein Werkstück richtbar ist.

13. Adapter zum Verbinden eines Mehrachsen-Schwenkkopfs mit einer Bearbeitungsmaschine, insbesondere einer Fräsmaschine oder einer Bohrmaschine, wobei der Mehrachsen-Schwenkkopf umfasst:
- eine Halteeinrichtung (3), die relativ zur Verbindungseinrichtung (2) um eine erste Achse (B') schwenkbar gelagert ist;
- eine Bearbeitungseinheit (4), die relativ zur Halteeinrichtung (3) um eine zweite Achse (A) schwenkbar gelagert ist, welche unter einem Winkel zur ersten Achse (B') verläuft, der mindestens 50°, bevorzugt mindestens 70°, besonders bevorzugt etwa 90° beträgt;
wobei der Adapter derart mit einer Verbindungseinrichtung (2) und/oder mit der Bearbeitungsmaschine verbunden oder verbindbar ist, dass die erste Achse (B') in mindestens einer bestimmungsgemässen Montagelage diagonal zur Z-Achse (Z) des Maschinenkoordinatensystems der Bearbeitungsmaschine ausgerichtet ist.

14. Verfahren zum Aufrüsten und/oder Umrüsten einer Bearbeitungsmaschine zur Bearbeitung eines Werkstücks (50), insbesondere einer Fräsmaschine oder Bohrmaschine, umfassend das Verbinden einer Verbindungseinrichtung (2) mindestens einer Mehrachsen-Schwenkkopf-Anordnung (1), insbesondere einer Mehrachsen-Schwenkkopf-Anordnung (1) gemäss einem der Ansprüche 1 bis 8, mit der Bearbeitungsmaschine, wobei die Mehrachsen-Schwenkkopf-Anordnung (1) enthält:
- eine Verbindungseinrichtung (2) zum Verbinden der Mehrachsen-Schwenkkopf-Anordnung (1) mit einer Bearbeitungsmaschine, insbesondere einer Fräsmaschine oder Bohrmaschine;
- eine Halteeinrichtung (3), die relativ zur Verbindungseinrichtung (2) um eine erste Achse (B') schwenkbar gelagert ist;
- eine Bearbeitungseinheit (4), die relativ zur Halteeinrichtung (3) um eine zweite Achse (A) schwenkbar gelagert ist, welche unter einem Winkel zur ersten Achse (B') verläuft, der mindestens 50°, bevorzugt mindestens 70°, besonders bevorzugt etwa 90° beträgt;
**dadurch gekennzeichnet, dass** die Verbindungseinrichtung (2) in einer derartigen Montagelage mit der Bearbeitungsmaschine verbunden wird, dass die erste Achse (B') diagonal zur Z-Achse (Z) des Maschinenkoordinatensystems der Bearbeitungsmaschine ausgerichtet ist.

15. Verfahren zur Bearbeitung eines Werkstücks (50) mit einer Bearbeitungsmaschine gemäss einem der Ansprüche 9 bis 12 und/oder mit einer mit dem Verfahren gemäss Anspruch 14 aufgerüsteten und/oder umgerüsteten Bearbeitungsmaschine, umfassend die Bearbeitung des Werkstücks (50), insbesondere mit einem in der Aufnahme, insbesondere einer Spindel (5), aufgenommenen Werkzeug, insbesondere einem Bohrer oder Fräswerkzeug (6).

16. Verfahren zur Bearbeitung eines Werkstücks (50) mit einem Werkzeug durch Plandrehen entlang einer Bearbeitungsebene, insbesondere Verfahren gemäss Anspruch 15, wobei das Werkzeug mit einer Längsrichtung entlang einer dritten Achse (10) ausgerichtet ist und die dritte Achse (10)
- in mindestens einem ersten Schritt im Wesentlichen entlang einer ersten kegelförmigen Fläche mit einem ersten halben Öffnungswinkel (ω₁) und mit einem ersten Abstand a₁ zwischen der Kegelspitze (S₁) der ersten kegelförmigen Fläche (K₁) und der Bearbeitungsebene geführt wird und
- in mindestens einem zweiten Schritt im Wesentlichen entlang einer zweiten kegelförmigen Fläche mit einem zweiten halben Öffnungswinkel (ω₂) und mit einem zweiten Abstand a₂ zwischen der Kegelspitze (S₂) der zweiten kegelförmigen Fläche (K₂) und der Bearbeitungsebene geführt wird,
wobei der zweite halbe Öffnungswinkel (ω₂) vom ersten halben Öffnungswinkel (ω₁) verschieden ist und/oder der zweite Abstand (a₂) vom ersten Abstand (a₁) verschieden ist.
